# EUROPÄISCHE PATENTSCHRIFT

(11) **EP 1 080 957 B1**
(45) Veröffentlichungstag und Bekanntmachung des Hinweises auf die Patenterteilung: **07.05.2003**
(21) Anmeldenummer: 99117306.3
(22) Anmeldetag: 03.09.1999
(51) Int. Cl.: B60H 1/00

(54) **Eisspeicherelement mit eingedicktem Eisspeichermedium**
Ice storage element with thickened ice storage medium
Elément de stockage de glace avec un agent de stockage de glace épaissi

(43) Veröffentlichungstag der Anmeldung: 07.03.2001
(73) Patentinhaber: Webasto Thermosysteme International GmbH, 82131 Stockdorf (DE)
(72) Erfinder: Glaser, Peter, 81477 München (DE); Otte, Albrecht, 82327 Tutzing (DE); Ludwig, Andreas, 82377 Penzberg (DE)
(74) Vertreter: Wiese, Gerhard

(56) Entgegenhaltungen:
- EP-A- 0 902 243
- DE-C- 19 839 994
- FR-A- 2 574 531

## Beschreibung

Die Erfindung betrifft laut Oberbegriff des Anspruchs 1 ein aus EP-A-0 902 243 bekanntes Eisspeicherelement, insbesondere für eine Standklimaanlage eines Kraftfahrzeugs, mit einem Hohlkörper zur Bildung wenigstens eines Speicherraums für ein im aufgetauten Zustand flüssiges Eisspeichermedium, das in wärmeleitende Verbindung mit einem Kältemittel bringbar ist.

Herkömmliche Eisspeicherelemente der vorstehend genannten Art sind mit aufwendigen und damit kostenintensiven Volumenausgleichselementen, beispielsweise aus Gummi oder Kunststoff versehen, um eine Volumenkompensation des sich beim Phasenübergang/Einfrieren ausdehnenden Eisspeichermediums zu gewährleisten. Nachteilig bei bekannten Eisspeicherelementen der in Rede stehenden Art ist außerdem, daß das aufgetaute Eisspeichermedium innerhalb des Speicherraums des Eisspeicherelements während der Fahrt Schwappgeräusche erzeugt, die deshalb lästig sind, weil sie bei Anordnung in oder unmittelbar an der Fahrerkabine vom Fahrer bzw. Beifahrer wahrgenommen werden.

Der vorliegenden Erfindung liegt deshalb die Aufgabe zugrunde, ein Eisspeicherelement zu schaffen, welches mit einfachen und kostengünstigen Maßnahmen ein Ausdehnen des Eisspeichermediums beim Phasenübergang/Einfrieren beschädigungsfrei übersteht und dessen Eisspeichermedium im aufgetauten Zustand keine Schwappgeräusche erzeugt.

Gelöst wird diese Aufgabe durch die kennzeichnenden Merkmale des Anspruchs 1. Vorteilhafte Weiterbildungen der Erfindung sind in den Unteransprüchen angegeben.

Mit anderen Worten ist erfindungsgemäß das Eisspeichermedium in seinen Eigenschaften derart modifiziert, daß sich im aufgebauten Zustand eine schaumartige oder gelartige Konsistenz einstellt, die Schwappbewegungen des aufgetauten Mediums verhindert. Außerdem ist die Eigenschaft des Eisspeichermediums durch das zugesetzte Schäum- oder Eindickungsmittel derart verändert, daß während des Einfrierens, d.h. im Übergang vom flüssigen zum festen Zustand ein Eisbrei gebildet wird, der ein gleichmäßiges Ausdehnen des Eisspeichermediums während des Einfrierens gewährleistet, so daß die Wandung des Speicherraum des Eisspeicherelements gleichmäßig belastet wird und die Volumenausdehnung des einfrierenden Eisspeichermediums verkraften kann. Der sich bildende Eisbrei ist von der Konsistenz her mit Harsch oder fein zerstoßenem Eis vergleichbar.

Durch die erfindungsgemäße Maßnahme ist bis auf ein üblicherweise vorgesehenes Luftpolster im Speicherraum des Eisspeicherelements kein zusätzliches Volumenausgleichselement erforderlich, um das Eisspeichermedium in dem geschlossenen, starren, den Speicherraum bildenden Speicherbehälter einzufrieren und aufzutauen. Außerdem werden Schwappgeräusche zuverlässig unterbunden, weil das aufgetaute Eisspeichermedium derart schäumend oder zäh ist, daß es zu träge ist, um sich schwappend zu bewegen.

Vorteilhafterweise wird ein Eisspeichermedium auf Wasserbasis verwendet. Das dem Eisspeichermedium zugesetzte Eindickungsmittel kann beispielsweise ein Geliermittel sein.

Als Eindickungsmittel bzw. Geliermittel eignen sich an sich beliebige mit dieser Eigenschaft bekannte Mittel, die auf das verwendete Eisspeichermedium, das beispielsweise bevorzugt auf Wasserbasis vorliegt, abgestimmt sind. Vorteilhafterweise wird als Eindickungsmittel bzw. Geliermittel ein anorganisches Mittel mit Eindick- bzw. Geliereigenschaft verwendet. Alternativ hierzu kann ein organisches Eindickungsmittel zum Einsatz gelangen, beispielsweise in Gestalt eines quellfähigen Polymers oder in Gestalt eines biologischen Eindickungsmittels.

Vorteilhafterweise kann das Eindickungsmittel auch in Gestalt eines Gemisches verschiedener Eindickungszusätze und/oder Schäummittel vorliegen, um die gewünschte Konsistenz des Eisspeichermediums zu gewinnen.

Nachfolgend wird die Erfindung anhand der Zeichnung beispielhaft näher erläutert; es zeigen:
- Fig. 1: eine schematische Ansicht einer Fahrerkabine eines Lastkraftwagens mit einer Kompressionskälteanlage und mehreren Eisspeicher-Baueinheiten, und
- Fig. 2: einen Querschnitt durch eine Eisspeicher-Baueinheit mit mehreren erfindungsgemäß ausgebildeten Eisspeicherelementen.

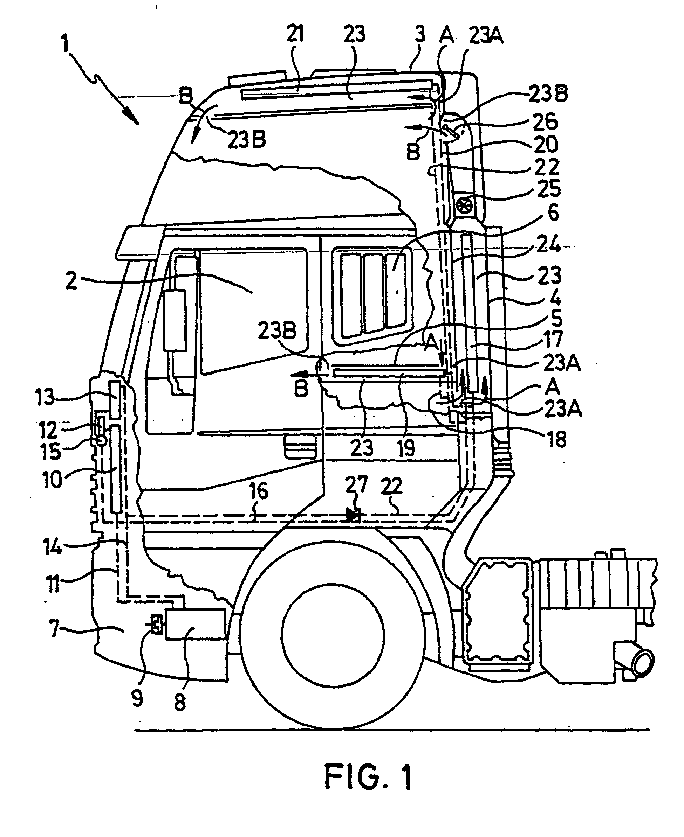

Im Ausführungsbeispiel ist in Fig. 1 ein Teil eines Lastkraftwagens 1 dargestellt, bei dem innerhalb einer Fahrerkabine 2 ein Fahrzeuginnenraum ausgebildet ist. Die Fahrerkabine 2 wird nach oben von einem Dach 3 und nach hinten von einer Rückwand 4 begrenzt. Innerhalb des hinteren Teils der Kabine ist eine horizontale Trennwand 5 vorgesehen, wie sie als Liegefläche zur Aufteilung von Schlafkojen in einem Lastkraftwagen des Fernverkehrs üblich ist, bei dem der hintere Teil der Fahrerkabine 2 als Schlafkabine 6 ausgebildet ist.

In einem Motorraum 7 des Lastkraftwagens 1 ist ein Kompressor 8 angeordnet, der mittels einer Magnetkupplung 9 mit einem nicht dargestellten Antriebsmotor des Fahrzeugs über Keilriemen verbindbar ist. Der Kompressor 8 ist in einen ersten Kältemittelkreislauf eingebunden, wobei er über eine Vorlaufleitung 11 mit einem Verflüssiger 10, einem Sammler 12 und einem ersten Verdampfer 13 mit Expansionsorgan verbunden ist. Das im ersten Kältemittelkreislauf kursierende Kältemittel wird vom ersten Verdampfer 13 über eine Rücklaufleitung 14 zum Kompressor 8 zurückgeleitet.

Zwischen Sammler 12 und erstem Verdampfer 13 ist ein Umschaltventil 15 vorgesehen, bei dem von der Vorlaufleitung 11 eine Zweig-Vorlaufleitung 16 abzweigt, die zu einem zweiten Kältemittelkreislauf gehört. In diesen zweiten Kältemittelkreislauf sind eine oder mehrere Eisspeicher-Baueinheiten integriert, welche jeweils aus einem zweiten Verdampfer mit Expansionsorgan und einem diesen umgebenen Eisspeicher bestehen. Eine erste Eisspeicher-Baueinheit 17 ist im Bereich der Rückwand 4 des Lastkraftwagens 1 angeordnet. Das über die Zweig-Vorlaufleitung 16 zuströmende Kältemittel kann über eine Zweigleitung 18, optional mittels eines weiteren nicht dargestellten Umschaltventils zu einer zweiten Eisspeicher-Baueinheit 19 und einer dritten Eisspeicher-Baueinheit 21 geleitet werden. Die zweite Eisspeicher-Baueinheit 19 ist dabei in der horizontalen Trennwand 5 im Bereich der Schlafkabine 6 vorgesehen.

Die dritte Eisspeicher-Baueinheit 21 ist im Bereich des Daches 3 vorgesehen. Sie steht über eine weitere Zweigleitung 20 in Verbindung mit der Zweig-Vorlaufleitung 16 des Kältemittels. Die Eisspeicher-Baueinheiten 17, 19 bzw. 21 sind an eine gemeinsame Rücklaufleitung 22 angeschlossen, welche ihrerseits mit der Rücklaufleitung 14 des Kältemittels zum Kompressor 8 verbunden ist. Ein in der Rücklaufleitung 22 angeordnetes Rückschlagventil 27 unterbindet dabei das Zurückströmen von Kältemittelgas zu den Eisspeicher-Baueinheiten 17, 19 bzw. 21 und das dortige Auskondensieren.

Die Eisspeicher-Baueinheit 17 ist in einem Aufnahmeraum 23 angeordnet, welcher von der Rückwand 4 der Fahrerkabine 2 und einer davor mit Abstand angeordneten Zwischenwand 24 vorgesehen ist. Wahlweise kann die Eisspeicher-Baueinheit auch in einen Ausschnitt der Rückwand eingesetzt werden. Ebenso sind die optional oder alternativ vorgesehene Eisspeicher-Baueinheit 21 im Dachbereich und die weitere optional oder alternativ vorgesehene Eisspeicher-Baueinheit 19 im Bereich der horizontalen Trennwand 5 jeweils in einem Aufnahmeraum 23 vorgesehen, der durch eine Doppelwandigkeit hergestellt wird.

Die Aufnahmeräume 23 sind jeweils durch einen Eintritt 23 A und einen Austritt 23 B mit der Fahrerkabine 2 verbunden, so daß eine Luftströmung durch den doppelwandigen Aufnahmeraum 23 stattfinden kann. Diese Luftdurchströmung, die entweder durch Konvektion aufgrund der temperaturbedingten Dichteunterschiede der Luft in der Fahrerkabine 2 stattfindet oder aber durch ein optional vorgesehenes Gebläse 25 zwangsweise stattfindet, kann mittels eines Absperrorgans 26 geregelt werden. Das Absperrorgan 26 ist beispielsweise als schwenkbare Klappe ausgebildet, welche beispielhaft am oberen Ende des Aufnahmeraums 23 für die Eisspeicher-Baueinheit 17 dargestellt ist. Die Klappe kann manuell oder motorisch betätigt werden und durch entsprechende andere Absperrorgane, wie verschiebbare Gitter oder Schieber ersetzt werden. Auch wenn dies in der Fig. 1 nicht dargestellt ist, versteht sich, daß auch die anderen Aufnahmeräume 23 für die Eisspeicher-Baueinheiten 19 bzw. 21 jeweils mit einem entsprechenden Absperrorgan und/oder einem Gebläse ausgestattet sein können. Durch den Eintritt 23 A strömt Luft entsprechend dem Pfeil A in den Aufnahmeraum 23, wird an der betreffenden Eisspeicher-Baueinheit 17, 19 bzw. 21 vorbeigeleitet und dabei abgekühlt und verläßt durch die Austrittsöffnungen 23 B entsprechend dem Pfeil B als abgekühlte Luft die Aufnahmeräume 23 in Richtung zur Fahrerkabine 2.

Die Anlage ist vorzugsweise so ausgelegt, daß der Kompressor 8 genügend Leistung aufweist, um auch bei großem Kältebedarf während des Betriebes des Fahrzeugmotors nicht nur genügend Kälteleistung für den ersten Verdampfer 13 zur normalen Abkühlung der Fahrerkabine 2 während der Fahrt bereitzustellen, sondern zusätzlich einen oder mehrere der Eisspeicher-Baueinheiten 17, 19, 21 durch Umwandlung von Wasser in Eis aufzuladen, so daß bei einer anschließenden Pause durch eine einfache Durchströmung der betreffenden Aufnahmeräume 23 mit Luft eine Abkühlung der Fahrerkabine 2 erreicht werden kann. Hierdurch ist gewährleistet, daß der Fahrer während seiner Ruhe- bzw. Schlafpausen auch in wärmeren Ländern ein angenehmes Klima in der Fahrerkabine 2 vorfindet.

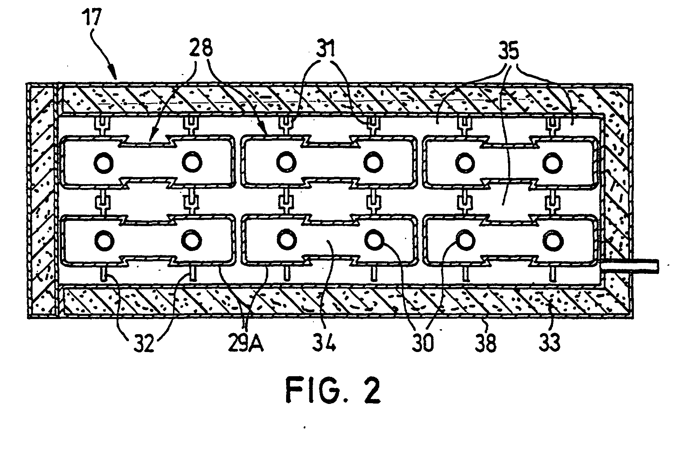

In Fig. 2 ist eine der Eisspeicher-Baueinheiten 17, 19, 21 im Querschnitt dargestellt. Als Bezugszahl wurde dabei exemplarisch die 17 verwendet. Dabei sind innerhalb einer umgebenden Gehäuse-Außenwand 38 und einer Isolierschicht 33 im Ausführungsbeispiel nebeneinander insgesamt sechs Eisspeicherelemente 28 angeordnet, deren Außenwand jeweils von einem langgestreckten Profilkörper 29A begrenzt wird. Der Profilkörper ist vorzugsweise als Strangpreßprofil aus Leichtmetall, wie beispielsweise Aluminium hergestellt und kann je nach Bedarf auf die benötigte Länge abgeschnitten werden. In dem Querschnitt des Profilkörpers 29A sind zwei Kältemittelrohre 30 integriert, durch welche Kältemittel von der Zweig-Vorlaufleitung 16 zu den Eisspeicher-Baueinheiten und somit zu den darin angeordneten Eisspeicherelementen 28 strömt. Innerhalb einer Eisspeicher-Baueinheit 17, 19, 21 sind die Eisspeicherelemente 28 durch im Bereich der Stirnseiten angeordnete, nicht dargestellte Rohrbögen strömungsmäßig in Reihe und/oder parallel geschaltet.

Die Profilkörper 29A weisen an einer Außenwand jeweils zwei gabelförmige Rippen 31 und an der gegenüberliegenden Wand stegförmige Rippen 32 auf. Dabei ist die am vorderen Ende einer gabelförmigen Rippe 31 gebildete Aufnahmenut zur Aufnahme einer stegförmigen Rippe 32 eines benachbarten Eisspeicherelements 28 vorgesehen. Durch den formschlüssigen Eingriff der Rippen 31 bzw. 32 ineinander lassen sich beliebig große, modular aufgebaute Eisspeicher-Baueinheiten aus beliebig vielen Eisspeicherelementen 28 in einer selbsttragenden Struktur zusammensetzen. Dabei können im Bereich der Rippen 31 bzw. 32 zusätzliche Verbindungselemente, wie Klipse, Querverschraubungen oder Kleberaupen vorgesehen sein.

Erfindungsgemäß gelangt als Kältespeichermedium in den Eisspeicherelementen 28 ein Speichermedium auf Wasserbasis zum Einsatz, dem ein Eindickungsmittel bzw. ein Gemisch aus Eindickungsmitteln, bevorzugt ein Geliermittel zugesetzt ist, und zwar in einer Quantität und Qualität derart, daß bei aufgetautem Eisspeichermedium gewährleistet ist, daß bei fahrendem Fahrzeug bzw. Lastkraftwagen Schwappgeräusche unterbunden werden, weil das Eisspeichermedium entsprechend dick ist. Außerdem wird erfindungsgemäß das Eindicken des Eisspeichermediums mittels des zugesetzten Eindickungsmittels derart vorgenommen, daß beim Einfrieren des Eisspeichermediums, d.h. beim Phasenübergang/Einfrieren zunächst ein Eisbrei entsteht, der ein gleichmäßiges Ausdehnen des Eisspeichermediums während des Einfriervorgangs und damit eine gleichmäßige Belastung des Aufnahmeraums des Eisspeicherelements gewährleistet.

Als geeignete Speichermedien haben sich die in den folgenden Ausführungsbeispielen erläuterten Substanzen erwiesen:

### Beispiel 1:

Mischung aus 4 bis 7%, vorzugsweise 5,87% Fettalkohol C-10, wie beispielsweise 1-Decanol von der Firma Sigma Aldrich, 89555 Steinheim, optional 0,01 bis 0,05%, vorzugsweise 0,03% Tenside, 4 bis 9 Promille, vorzugsweise 6,5 Promille eines quellfähigen Polymers wie beispielsweise Favorpac 300 von der Firma Chemische Fabrik Stockhausen, 47805 Krefeld, Rest entionisiertes Wasser.

### Beispiel 2:

Mischung aus etwa 15 bis 22%, vorzugsweise 20% Dialkohol, 4 bis 6%, vorzugsweise 5% stark schäumendes Spezialtensid, Rest entionisiertes Wasser.

Während im Beispiel 1 das quellfähige Polymer für eine eisbrei-artige Struktur der gefrorenen Substanz sorgt, die im getauten Zustand gelartig ist, ist die Substanz im zweiten Beispiel im getauten Zustand stark schäumend und im gefrorenen Zustand ebenfalls harsch-artig.

### Beispiel 3:

Mischung aus
2 bis 2,3 %, vorzugsweise 2,17 % Polyvinylalkohol,
0,3 bis 0,5 %, vorzugsweise 0,39 % Borax,
0,15 bis 0,26 %, vorzugsweise 0,21 % Biozid und als Rest entionisiertes Wasser

Die Substanz gemäß Beispiel 3 ist im getauten Zustand hochviskos (gel-artig) und im Zustand des Phasenübergangs in den gefrorenen Zustand harsch-artig).

### Bezugszeichenliste

- 1: Lastkraftwagen
- 2: Fahrerkabine
- 3: Dach
- 4: Rückwand
- 5: (horizontale) Trennwand
- 6: Schlafkabine
- 7: Motorraum
- 8: Kompressor
- 9: Magnetkupplung
- 10: Verflüssiger
- 11: Vorlaufleitung
- 12: Sammler
- 13: Verdampfer
- 14: Rücklaufleitung
- 15: Umschaltventil
- 16: Zweig-Vorlaufleitung
- 17: Eisspeicher-Baueinheit
- 18: Zweigleitung
- 19: Eisspeicher-Baueinheit
- 20: Zweigleitung
- 21: Eisspeicher-Baueinheit
- 22: Rücklaufleitung
- 23: Aufnahmeraum
- 24: Eintritt (zu 23)
- 25: Gebläse
- 26: Absperrorgan
- 27: Rückschlagventil
- 28: Eisspeicherelement
- 29A: Profilkörper
- 30: Kältemittelrohr
- 31: gabelförmige Rippe
- 32: stegförmige Rippe
- 33: Isolierschicht
- 34: Speicherraum
- 35: Luftkanal
- 36: Eisspeichermedium
- 38: Außenwand (von 17, 19, 21)

## Patentansprüche

1. Eisspeicherelement (28), insbesondere für eine Standklimaanlage eines Kraftfahrzeugs, mit einem Hohlkörper zur Bildung wenigstens eines Speicherraums (34) für ein im aufgetauten Zustand flüssiges geleeartiges Eisspeichermedium (36), das in wärmeleitende Verbindung mit einem Kältemittel bringbar ist, **dadurch gekennzeichnet, daß** das Eisspeichermedium (36) ein Schäum- oder Eindickungsmittel in einer Qualität und Quantität enthält, daß ein Schwappen des Eisspeichermediums (36) im aufgetauten Zustand (36) unterbunden und ein Einfrieren des Eisspeichermediums (36) in Gestalt eines Eisbreies zumindestens während einer Phase der Volumenexpansion gewährleistet sind.

2. Eisspeicherelement nach Anspruch 1, **dadurch gekennzeichnet, daß** das Eisspeichermedium (36) ein Medium auf Wasserbasis ist.

3. Eisspeicherelement nach Anspruch 1 oder 2, **dadurch gekennzeichnet, daß** das Eindickungsmittel ein Geliermittel ist.

4. Eisspeicherelement nach Anspruch 1, 2 oder 3, **dadurch gekennzeichnet, daß** das Eindickungsmittel ein anorganisches Eindickungsmittel ist.

5. Eisspeicherelement nach Anspruch 1, 2 oder 3, **dadurch gekennzeichnet, daß** das Eindickungsmittel ein organisches Eindickungsmittel ist.

6. Eisspeicherelement nach Anspruch 5, **dadurch gekennzeichnet, daß** das Eindickungsmittel ein Polymerzusatz ist.

7. Eisspeicherelement nach Anspruch 5, **dadurch gekennzeichnet, daß** das Eindickungsmittel ein biologisches Eindickungsmittel ist.

8. Eisspeicherelement nach Anspruch 6, **dadurch gekennzeichnet, daß** das Eispeichermedium eine Mischung aus 4 bis 7%, vorzugsweise 5,87% Fettalkohol C-10, optional 0,01 bis 0,05%, vorzugsweise 0,03% Tenside, 4 bis 9 Promille, vorzugsweise 6,5 Promille quellfähiges Polymer, und dem Rest aus entionisiertem Wasser enthält.

9. Eisspeicherelement nach Anspruch 1, **dadurch gekennzeichnet, daß** als Schäummittel ein Tensid verwendet wird.

10. Eisspeicherelement nach Anspruch 9, **dadurch gekennzeichnet, daß** das Eisspeichermedium eine Mischung aus etwa 15 bis 22%, vorzugsweise 20% eines Dialkohols, 4 bis 6%, vorzugsweise 5% eines stark schäumenden Tensids und dem Rest aus entionisiertem Wasser enthält.

11. Eisspeichermedium nach einem der vorhergehenden Ansprücher, **dadurch gekennzeichnet, daß** das Eisspeichermedium eine Mischung aus
2 % bis 2,3 %, vorzugsweise 2,17 % Polyvinylalkohol,
0,3 % bis 0,5 %, vorzugsweise 0,39 % Borax,
0,15 % bis 0,26 %, vorzugsweise 0,21 % Biozid und als Rest entionisiertes Wasser

## Claims

1. An ice storage element (28) particularly for a standard air conditioning system of a motor vehicle, with a hollow body for forming at least one storage space (34) for a gel-like ice storage medium (36) which is liquid in its thawed state and which can be brought into heat-conductive connection with a refrigerant, **characterised in that** the ice storage medium (36) contains a foaming or thickening agent in a quality and quantity such that the sloshing of the ice storage medium (36) in the thawed state (36) is prevented and freezing of the ice storage medium (36) in the form of an ice pulp are guaranteed at least during one phase of the volume expansion.

2. An ice storage element according to claim 1, **characterised in that** the ice storage medium (36) is a water based medium.

3. An ice storage element according to claim 1 or 2, **characterised in that** the thickening agent is a gelling agent.

4. An ice storage element according to claim 1, 2 or 3, **characterised in that** the thickening agent is an inorganic thickening agent.

5. An ice storage element according to claim 1, 2 or 3, **characterised in that** the thickening agent is an organic thickening agent.

6. An ice storage element according to claim 5, **characterised in that** the thickening agent is a polymer additive.

7. An ice storage medium according to claim 5, **characterised in that** the thickening agent is a biological thickening agent.

8. An ice storage element according to claim 6, **characterised in that** the ice storage medium contains a mixture of 4 to 7% and preferably 5.87%, fatty alcohol C-10, optionally 0.01 to 0.05%, preferably 0.03%, surfactant, 4 to 9 parts per thousand and preferably 6.5 parts per thousand, swellable polymer and the balance of deionised water.

9. An ice storage element according to claim 1, **characterised in that** a surfactant is used as the foaming agent.

10. An ice storage element according to claim 9, **characterised in that** the ice storage medium contains a mixture of approximately 15 to 22%, preferably 20%, of a dialcohol, 4 to 6% and preferably 5% of a strongly foaming surfactant and the balance of deionised water.

11. An ice storage medium according to one of the preceding claims, **characterised in that** the ice storage medium contains a mixture of
2% to 2.3%, preferably 2.17%, polyvinyl alcohol,
0.3% to 0.5%, preferably 0.39%, borax,
0.15% to 0.26%, preferably 0.21%, biozide and the balance deionised water

## Revendications

1. Elément de stockage de glace (28), en particulier pour une installation de climatisation d'un véhicule automobile, présentant un corps creux destiné à former au moins un espace de stockage (34) d'un agent de stockage de glace (36) fluide de type gel à l'état décongelé, lequel peut être amené par relation de conductibilité thermique avec un agent réfrigérant, **caractérisé en ce que** l'agent de stockage de glace (36) contient un agent moussant ou épaississant dans une qualité et une quantité telles que l'on garantit qu'une oscillation de l'agent de stockage de glace (36) est réprimée à l'état décongelé (36) et qu'une congélation de l'agent de stockage de glace (36) sous la forme d'une bouillie de glace est garantie au moins pendant une phase de l'expansion de volume.

2. Elément de stockage de glace selon la revendication 1, **caractérisé en ce que** l'agent de stockage de glace (36) est un milieu à base d'eau.

3. Elément de stockage de glace selon la revendication 1 ou 2, **caractérisé en ce que** l'agent épaississant est un agent gélifiant

4. Elément de stockage de glace selon la revendication 1, 2 ou 3, **caractérisé en ce que** l'agent épaississant est un agent épaississant inorganique.

5. Elément de stockage de glace selon la revendication 1, 2 ou 3, **caractérisé en ce que** l'agent épaississant est un agent épaississant organique.

6. Elément de stockage de glace selon la revendication 5, **caractérisé en ce que** l'agent épaississant est un additif polymère.

7. Elément de stockage de glace selon la revendication 5, **caractérisé en ce que** l'agent épaississant est un agent épaississant biologique.

8. Elément de stockage de glace selon la revendication 6, **caractérisé en ce que** l'agent de stockage de glace contient un mélange de 4 à 7 %, de préférence 5,87 % d'alcool gras en C₁₀, en option de 0,01 à 0,05 %, de préférence 0,03 %, de tensioactifs, de 4 à 9 pour-mille, de préférence 6,5 pour mille, d'un polymère apte au gonflement, le reste d'eau désionisée.

9. Elément de stockage de glace selon la revendication 1, **caractérisé en ce que** l'on utilise en tant qu'agent moussant un tensioactif.

10. Elément de stockage de glace selon la revendication 9, **caractérisé en ce que** l'agent de stockage de glace contient un mélange d'environ 15 à 22 %, de préférence 20 % d'un dialcool, de 4 à 6 %, de préférence 5 %, d'un tensioactif fortement moussant, le reste d'eau désionisée.

11. Elément de stockage de glace selon l'une des revendications précédentes, **caractérisé en ce que** l'agent de stockage de glace contient un mélange de
2 % à 2,3 %, de préférence 2,17 %, d'alcool de polyvinyle,
0,3 % à 0,5 %, de préférence de 0,39 %, de borax,
0,15 % à 0,26 %, de préférence 0,21 %, de biocide, et le reste d'eau désionisée.
